# EUROPEAN PATENT APPLICATION

(11) **EP 4 129 079 A1**
(43) Date of publication of application: **08.02.2023**
(21) Application number: 21776083.4
(22) Date of filing: 18.05.2021
(51) Int. Cl.: A23L 2/00, A23L 2/42, A23L 2/02, A23L 2/08

(54) **PRODUCTION METHOD FOR CONCENTRATED JUICE**

(30) Priority: 24.03.2020 JP 2020052721
(71) Applicant: Kagome Co., Ltd., Nagoya-shi, Aichi 460-0003 (JP)
(72) Inventor: TSUNOI Tatsuto, Tokyo 103-0014 (JP)
(74) Representative: Mewburn Ellis LLP
(86) International application number: PCT/JP2021/018698
(87) International publication number: WO 2021/193985

(57) **Abstract**

The present invention aims to solve the problem of quality stabilization and production efficiency in concentrated juice. To solve this problem, the inventor has diligently tried and consequently find out continuously concentrating juice simultaneously or parallelly with the enzymatic process. The invented producing method comprises enzyme adding step (S10), concentrating step and enzymatically processing step (S20), heating step (S30), and cooling step and packing step (S40). The concentrating step and enzymatically processing step are done simultaneously or parallelly. The enzymatically processing step is done during the concentrating step. The enzyme is reacting during the vegetable juice or the fruit juice is being concentrated.

## Description

### TECHNICAL FIELD

The present invention relates to a method for producing concentrated juice.

### BACKGROUND ART

In recent years, the uses of vegetable juice and fruit juice have diversified, which include luxury drinks, health drinks, soups, and seasonings. The way of getting the vegetable juice is to crush and squeeze vegetables. The way of getting the fruit juice is to crush and squeeze fruits.

In addition, the vegetable juice and the fruit juice are required to have various improvements, such as a taste or flavor improvement, a physical property change, and a functional ingredient increase.

One of the ways of improving vegetable juice and fruit juice is an enzymatically processing technology. Patent Document 1 discloses a method for producing vegetable juice and/or fruit juice, which aims to improve mineral absorption and realize drinkability. This method features that a cellulase process and a mechanical shearing process are done at the same time.

### CITATION LIST

### PATENT LITERATURE

Patent Document 1: JP-A-2012-125179

### SUMMARY OF INVENTION

### TECHNICAL PROBLEM

The present invention aims to solve the problem of quality stabilization and production efficiency in concentrated juice.

Concentrating technology and enzymatically processing technology are respectively useful. The vegetable juice and the fruit juice are generally concentrated and then marketed because reducing the volume of vegetable juice and fruit juice lowers transportation costs. On the other hand, processing the vegetable juice and/or the fruit juice with an enzyme can bring desired ingredients and physical properties.

Using this concentration and this enzymatic process together has an issue in costs. Processing concentrated vegetable juice or concentrated fruit juice with an enzyme adds enzymatic process costs to concentration costs. Even if the enzymatic process is done before the concentration (process between primary and secondary processes), the enzymatic process costs are added in the same manner. From a perspective of cost effectiveness, the enzymatic process hardly prevails.

The combination use of the concentration and the enzymatic process further has some quality issues, such as how to grasp the characteristics of an enzyme, how to control the proliferation of microorganisms under predetermined temperatures, and how to stabilize the characteristics given by the enzymatic process. In particular, these issues remarkably appear in enzymatically processing a large amount of the vegetable juice and/or the fruit juice.

### SOLUTION TO PROBLEM

To solve this problem, the inventor has diligently tried and consequently find out continuously concentrating juice simultaneously or parallelly with the enzymatic process. This streamlines the processes of producing the concentrated juice. That is, the concentrated juice is produced efficiently. In addition, the quality of the concentrated juice becomes stable. The "concentrated juice(s)" here means vegetable juice, fruit juice, and/or the other plant juice which are concentrated and enzymatically processed.

The invented method for producing concentrated juice comprises at least a concentrating step and an enzymatically processing step. A person and/or an apparatus continuously concentrate vegetable juice and/or fruit juice. A person and/or an apparatus process the vegetable juice and/or the fruit juice with an enzyme. The enzymatically processing step is done simultaneously or parallelly with the concentrating step. In other words, the enzymatically processing step is done during the concentrating step. The method further comprises an adding step. A person and/or an apparatus continuously or intermittently add an enzyme to the vegetable juice or the fruit juice during or before the concentrating step. If necessary, this method further comprises a preheating step. A person and/or an apparatus preliminarily heat at least one of vegetables, fruits, vegetable juice, and fruit juice. The preheating step is done before the enzymatically processing step.

In this method, preferably, concentration conditions and enzymatic process conditions are entirely or partially the same. The enzymatically processing step uses an enzyme that has an optimum temperature within the temperature range of the vegetable juice or the fruit juice during the concentrating step. The temperature of the vegetable juice or the fruit juice during the concentrating step is 50°C or more and 75°C or lower. The enzymatically processing step uses an enzyme that has optimum a pH within a pH range of the vegetable juice or the fruit juice during the concentrating step. The pH of the vegetable juice or the fruit juice is 3.0 or more and 5.0 or less. The duration time for the concentration step and the enzymatically processing step is 30 minutes or more and 3 hours or less.

The invented method for producing concentrated juice comprises at least a concentrating step and an adding step. A person and/or an apparatus continuously concentrate vegetable juice and/or fruit juice. A person and/or an apparatus continuously or intermittently add an enzyme to the vegetable juice or the fruit juice. The adding step is done during the concentrating step. The optimum temperature and optimum pH of the enzyme and the concentration conditions are the same as described above.

The invented method for modifying concentrated juice comprises at least a concentrating step and an enzymatically processing step. A person and/or an apparatus continuously concentrate vegetable juice and/or fruit juice. A person and/or an apparatus process the vegetable juice and/or the fruit juice with an enzyme. The enzymatically processing step is done simultaneously or parallelly with the concentrating step. In other words, the enzymatically processing step is done during the concentrating step. The method further comprises an adding step. A person and/or an apparatus continuously or intermittently add an enzyme to the vegetable juice or the fruit juice during or before the concentrating step. If necessary, this method further comprises a preheating step. A person and/or an apparatus preliminarily heat at least one of vegetables, fruits, vegetable juice, and fruit juice. The preheating step is done before the enzymatically processing step. The optimum temperature and optimum pH of the enzyme and the concentration conditions are the same as described above.

The invented method for modifying concentrated juice comprises at least a concentrating step and an adding step. A person and/or an apparatus continuously concentrate vegetable juice and/or fruit juice. A person and/or an apparatus continuously or intermittently add an enzyme to the vegetable juice or the fruit juice. The adding step is done during the concentrating step. The optimum temperature and optimum pH of the enzyme and the concentration conditions are the same as described above.

### ADVANTAGEOUS EFFECTS OF INVENTION

The present invention will lead to quality stabilization and production efficiency in concentrated juice.

### BRIEF DESCRIPTION OF DRAWINGS

Figure is a flow chart on a method for producing concentrated juice.

### DESCRIPTION OF EMBODIMENTS

<Concentrated juice production method> Figure shows the flow of a method for producing concentrated juice (hereinafter referred to as "the producing method"). The producing method comprises an enzyme adding step (S10), a concentrating step and an enzymatically processing step (S20), a heating step (S30), and, a cooling step and a packing step (S40). In this embodiment, "juice" means at least one of vegetable juice and fruit juice.

<Vegetable juice and Fruit juice> Vegetable juice includes vegetable juice (fresh juice), concentrated juice thereof (puree, paste), from-concentrate juice, and processed juice thereof. Fruit juice includes fruit juice (fresh juice), concentrated juice thereof (puree, paste), from-concentrate juice, and processed juice thereof. The vegetable juice is made from vegetables. The given examples of the vegetable are solanaceous vegetables (tomato, eggplant, paprika, bell pepper, potato, etc.), ammiaceous vegetables (carrot, celery, angelica keiskei, parsley, etc.), brassicaceous vegetables (cabbage, purple cabbage, brussels sprouts (Petit vert (R)), Chinese cabbage, pakchoi, radish, kale, cresson, Japanese mustard spinach ("Komatsuna"), broccoli, cauliflower, turnip, wasabi, mustard, etc.), chenopodiaceous vegetables (spinach, beet, etc.) asteraceous vegetables (lettuce, garland chrysanthemum (shun-giku), Boston lettuce, burdock, felon herb, etc.), liliaceae vegetables (onion, garlic, Welsh onion, etc.), cucurbitaceous vegetables (pumpkin, cucumber, bitter melon (niggauri), etc.), leguminous vegetable (green bean, pea, fava bean, green soybeans (edamame), etc.), other vegetables (mulukhiyah (Jew's mallow), asparagus, ginger, sweet potato, purple potato, perilla, red perilla, corn, etc.). The fruit juice is made from fruits. The given examples of the fruit are citrus fruits (lemon, orange, nable orange, grapefruit, tangerine, lime, citrus sudachi, citrus junos (yuzu), citrus depressa (flat lemon), tankan mandarin (tankan), etc.) and other fruits (apple, Japanese apricot, peach, cherry, apricot, plum, European plum (prune), Myrciaria dubia (Camu Camu), Asian pear, pear, loquat, strawberry, raspberry, blackberry, cassis, cranberry, blueberry, melon, watermelon, kiwi fruit, pomegranate, grape, banana, guava, acerola, pineapple, mango, passion fruit, lychee, etc.). For referring detailed explanation of the squeezing and the concentration, this specification incorporates the contents of "The latest fruit juice/fruit beverage dictionary" (supervised by the Japan Fruit Juice Association).

<Enzyme adding step (S10)> An enzyme is added to enzymatically process the vegetable juice or the fruit juice. This causes an enzymatic reaction. The enzyme to be added is one kind of food additive. The variety of the enzyme is not particularly limited but includes cellulase, pectinase, hemicellulase, protease, amylase, lipase, glutaminase, nuclease, deaminase, lactase, glucose oxidase, polyphenol oxidase, and β-glucosidase. The form of the enzyme is not particularly limited but includes powder, granule, and liquid.

In the case the vegetable juice or the fruit juice is given a powdered enzyme or a granular enzyme, this enzyme has pre-dissolved in an aqueous solvent. This makes the enzyme uniformly dispersed in the vegetable juice or the fruit juice so that the enzyme reaction becomes stable.

In the case the vegetable juice or the fruit juice is continuously concentrated (hereinafter referred to as "continuous concentration"), the enzyme is added continuously or intermittently. In the continuous concentration, the vegetable juice or fruit juice is continuously provided, and then such concentrated vegetable juice or such concentrated fruit juice is continuously released. A temperature during the concentration is high so that enzyme activity decreases. From that point of view, the enzyme having sufficient activity during concentrating the vegetable juice or the fruit juice is added. That makes enzyme reaction stable. On the other hand, dividedly adding the necessary amount of an enzyme also makes enzyme reaction stable. That is, the quality of the concentrated juice becomes stable and the production of concentrated juice becomes efficient. From the perspective of making enzymatically processing more efficient, the amount of the enzyme continuously added to the vegetable juice or the fruit juice (the amount added per unit time) depends on the amount of the substrate contained in the vegetable juice or the fruit juice. As the same, the amount of the enzyme intermittently added to the vegetable juice or the fruit juice (the amount per addition) also depends on the amount of the substrate contained in the vegetable juice or the fruit juice.

<Concentrating step and Enzymatically processing step (S20)> Concentrating step and enzymatically processing step are done simultaneously or parallelly. That is, the enzymatically processing step is done during the concentrating step. In other words, the enzyme is reacting during the vegetable juice or the fruit juice is being concentrated. This enables the quality of such concentrated and enzymatically processed vegetable juice and fruit juice to be stable. Each of the concentrated juice is produced efficiently. The concentrating step and the enzymatically processing step are not always required to be coincident with each other with respect to the start time and the end time thereof.

<Concentrating step> The vegetable juice or the fruit juice is concentrated to reduce the volume thereof. The present invention uses the principle of concentrating, which includes concentration by heating under reduced pressure and concentration with a membrane.

In the concentration by heating under reduced pressure, desired temperatures range from 50 to 75°C. If the temperature in concentration is higher than 75°C, the vegetable juice and the fruit juice are given a heated odor. If, on the other hand, a temperature in concentrating is lower than 50°C, the efficiency in concentrating deteriorates. Such a desired temperature range has a concern about proliferation of bacteria. In the concentration by heating under reduced pressure, a preferable lower limit temperature is 55°C. Furthermore preferable lower limit is 60°C. In addition, this temperature range in concentrating leads to desired pressure values in concentrating. Although changing a raw material varies a boiling point, the desired pressure values range from approximately 10 to 30 kPa. Pressure reduction shortens the time needed for concentrating so that the heating odor is suppressed and the production becomes more efficient.

In the concentration with a membrane, desired temperatures range from 50 to 75°C. If the temperature in concentrating with the membrane is higher than 75°C, the vegetable juice and the fruit juice are given a heated odor. If, on the other hand, a temperature in the concentration is lower than 50°C, the efficiency in the concentration deteriorates. Such a desired temperature range has a concern about the proliferation of bacteria. In the concentration with the membrane, a preferable lower limit temperature is 55°C. Furthermore preferable lower limit is 60°C.

Preferably, a method of concentrating is embodied by continuous concentration. In this method, the vegetable juice and/or the fruit juice are serially or sequentially provided and concentrated. Such concentrated vegetable juice and/or concentrated fruit juice are serially or sequentially released. The process with an enzyme can fluctuate pH and the like. Such fluctuations in pH and the like affect a conversion rate in the enzymatic process, which is defined as "the content of a final product in conversion/the content of an initial substrate". In this embodiment, as described above, the concentrating step and the enzymatically processing step are done simultaneously or parallelly. This continuous concentration controls the fluctuation of physical characteristics (i.e. consistency, pH, etc.) as much as possible so that enzymatic reaction becomes stable. That is, this enables the quality of such enzymatically processed vegetable juice and fruit juice to be stable.

A concentration rate is not particularly limited. Preferable concentration rates are 3 to 6 times. A lower concentration rate (e.g., less than twice) does not reduce the volume of the vegetable juice or the fruit juice sufficiently. This has few cost advantages. The higher the concentration rate is, the greater energy and time needed for the concentration. This has poor efficiency in the concentration. An evaporator using heating under reduced pressure includes a double effect evaporator and a triple effect evaporator. A concentrator using a membrane includes MF membrane concentrators, NF membrane concentrators, UF membrane concentrators, and RO membrane concentrators.

<Enzymatic process and Enzymatic reaction> An enzymatic process is a process that aims to convert a substrate into a product using an enzyme as a catalyst. An enzymatic reaction is a biochemical reaction whose catalyst is an enzyme. This reaction changes the characteristics of the vegetable juice or the fruit juice. For example, the physical properties of the vegetable juice or the fruit juice change. In addition, the nutritional ingredients and functional ingredients of the vegetable juice or the fruit juice increase.

<Heating step (S30)> The concentrated and enzymatically processed vegetable juice or fruit juice is then heated for enzyme inactivation and sterilization. Enzyme activity continuously causes the enzymatic reaction in products so that the quality of the products is unstable.

A heating temperature and a heating time are appropriately set in considering both the conditions for enzyme deactivation and the conditions for sterilization for food hygiene.

<Cooling step and Packing step (S40)> Each of the concentrated vegetable juice and the concentrated fruit juice is cooled and then packed, optionally. These processes are described as follows.

<Cooling step> Each of the concentrated vegetable juice and the concentrated fruit juice is cooled for the ease of packing. Heating in the previous step makes the temperature of each of the concentrated vegetable juice and the concentrated fruit juice high. Lowering the temperature eases the packing each of concentrated vegetable juice and the concentrated fruit juice. For example, such cooled concentrated juice does not need a heat-resistant container. Further, the cooled concentrated juice realizes the ease of carrying such a packed container. A method for the cooling method is known and is not particularly limited. Adding other ingredients (e.g., cooking oil, etc.) lowers the temperature.

<Packing step> Each of the concentrated vegetable juice and the concentrated fruit juice is packed optionally. Each of the concentrated vegetable juice and the concentrated fruit juice is packed for convenience in moving and transportation. Containers for packing are known already.

<Preheating> Ingredients are preheated optionally. Preheating is done to inactivate an enzyme originally contained in each of the ingredients. Especially, the preheating is needed for fresh ingredients, i.e. fresh vegetables, fresh fruits, etc. because the fresh ingredients are not heated. An enzyme contained in each of the ingredients acts after crushing (e.g., in concentrating). The act of such an originally contained enzyme makes the quality of final products unstable. In other words, characteristics of products unintentionally change, and functional ingredients of products unintentionally increase or decrease. Further, it is speculated that an added enzyme will not act as intended. The preheating eliminates the effects of the originally contained enzyme so that the added enzyme acts as intended.

The preheating has preferable temperatures of 70°C or higher, more preferable one of 80°C or higher, and furthermore preferable one of 90°C or higher, and preferable one of 100°C or lower.

A method of preheating is known already and is not particularly limited, i.e. with hot water or steam ("blanching"), a heat exchanger (tubular-type one, plate-type one, etc.), and the like.

<Concentration conditions and Enzymatically processing conditions> In the producing method, the enzymatically processing conditions follow the concentration conditions. In other words, changes in the concentration conditions also change the enzymatically processing conditions. For example, selecting an enzyme needs to consider the concentration conditions. The enzymatically processing conditions included temperature and pH. In particular, an optimum temperature means a temperature at which the activity of an enzyme is highest. An optimum pH means a pH at which the activity of an enzyme is highest. As described later, temperature change in concentrating causes a heating odor. In addition, the efficiency in the concentration goes worse.

<Temperature> In the concentrating step and the enzymatically processing step, preferable temperatures for the vegetable juice and/or the fruit juice range from 50 to 75°C. If a temperature is beyond 75°C, in the concentrating step and the enzymatically processing step, the vegetable juice, and the fruit juice are given a heated odor. If, on the other hand, the temperature is below 50°C, the efficiency in concentrating deteriorates. In the concentrating step and the enzymatically processing step, bacterium in the vegetable juice or the fruit juice proliferates. A preferable lower limit temperature is 55°C, furthermore preferable one is 60°C. Especially, under a pH of 5.0 or higher, the bacterium is more likely to proliferate. Thus, the concentrating step and the enzymatically processing step have preferable temperatures of 50°C or higher, more preferable temperatures of 60°C or higher. This will achieve sterilizing effect in the concentrating step and the enzymatically processing step. In this case, a preferable upper limit pH is 8.0.

<pH> In the concentrating step and the enzymatically processing step, preferable pHs for the vegetable juice and/or the fruit juice range from 3.0 to 5.0. If a pH is beyond 5.0, bacterium easily proliferates in the concentrating step and the enzymatically processing step. If a pH is below 3.0, the sourness of the vegetable juice and the fruit juice turns stronger. That is, such a low pH affects flavor. The pH has the preferable lower limit of 3.5, furthermore preferable one of 3.8. The pH has the more preferable upper limit of 4.5.

<Time duration> In the concentrating step and the enzymatically processing step, a preferred time duration ranges from 30 minutes to 3 hours. If the time duration is shorter than 30 minutes, concentration or enzymatic process does not go forward sufficiently. If the time duration is longer than 3 hours, the vegetable juice or the fruit juice is given a heated odor. Further, the bacterium in the vegetable juice or the fruit juice proliferates. The time duration has the more preferable lower limit of 1 hour, and the furthermore preferable one of 1.5 hours. Further, the time duration has the more preferable upper limit of 2.5 hours.

<Optimum temperature of enzyme> An optimum temperature of an enzyme means a temperature at which the activity of the enzyme is highest. At the optimum temperature, the enzyme acts most efficiently. This producing method uses optimum temperatures of an enzyme which are near to temperatures in concentrating, i.e., in this embodiment, 50 °C or higher and 75 °C or lower (50 to 75°C). Selecting such an enzyme makes the concentrating and enzymatically processing of the vegetable juice or the fruit juice efficient. More preferable optimum temperatures are 55 °C or higher.

<Optimum pH of enzyme> An optimum pH of an enzyme means a pH at which the activity of the enzyme is highest. At the optimum pH, the enzyme acts most efficiently. This producing method uses an enzyme whose optimum pHs are near to pHs in the concentration. If the pH of the vegetable juice or the fruit juice in the concentration is 3.0 or more and 5.0 or less (3.0 to 5.0), an optimum pH of a used enzyme is also from 3.0 or more and 5.0 or less (3.0 to 5.0). On the other hand, if the pH of the vegetable juice or the fruit juice in concentration is 5.0 or more and 8.0 or less (5.0 to 8.0), an optimum pH of an enzyme for use is also 5.0 or more and 8.0 or less (5.0 to 8.0). The optimum pHs of an enzyme for use are near to pHs of the vegetable juice or the fruit juice in concentration, so the concentrating step and enzymatically processing step can be efficiently done. More preferable optimum pHs are 3.5 or more. Furthermore, preferable optimum pHs are 4.5 or less.

### EXAMPLE

<Ingredients> This test used, as ingredients, Chilean tomato paste (Brix: 29.5) and deaminase ("deaminase G" made by Amano Enzyme Co., Ltd.).

<Test Method> Tomato paste was diluted with water and then 6150 liters ("L") of tomato juice (Brix: 4.5) was prepared. 40 L of a 5% aqueous deaminase solution was prepared. The tomato juice and the 5% aqueous deaminase solution were mixed and sufficiently stirred to obtain mixture 1. Mixture 1 was prepared just before concentrating. Mixture 1 was provided to the evaporator which uses heating under reduced pressure. Mixture 1 was concentrated under the following conditions.
Temperature: 58°C or higher and 68°C or lower
Pressure: 55 cmHg or higher and 75 cmHg or lower
Cooling Temperature: 37°C or higher and 40°C or lower

Mixtures 2 to 8 were prepared in the same manner as Mixture 1 and then provided sequentially to the evaporator. Each mixture was provided at 25-minute intervals. Specifically, Mixture 1 was provided in 25 minutes from the provision of Mixture 1.

The mixtures were enzymatically processed and concentrated to obtain concentrated tomato juice (Brix: 24). After being temporarily kept in a cushion tank, the concentrated tomato juice (Brix: 24) was sterilized (sterilization temperature: 109°C). Such sterilized concentrated tomato juice was cooled (cooling temperature: 29.5°C). Such cooled concentrated tomato juice was packed.

The concentrated tomato juice was first released 2 hours and 35 minutes after the provision of Mixture 1. Such released concentrated tomato juice was sampled at 30-minute intervals. To inactivate an enzyme, the sampled concentrated tomato juice was bathed in hot water (condition: 100°C, 10 minutes).

Brix, pH, and nucleic acid (AMP, IMP) of such enzyme-inactivated concentrated tomato juice (hereinafter referred to as "analytical sample") were analyzed.

The nucleic acids (AMP, IMP) were analyzed under the conditions described later. A standard curve or calibration curve is prepared using standard reagents as follows.
Standard Reagent for AMP: Adenosine 5'-phosphate ("A0158" made by Tokyo Kasei Co., Ltd.)
Standard Reagent for IMP: Inosine 5'-phosphate disodium hydrate ("I0036" made by Tokyo Kasei Co., Ltd.)

<Sample Preparation> An analytic sample was diluted in a measuring flask. Such diluted sample was sufficiently mixed. This sample was filtered using a 5A filter paper. Such resulting filtrate was filtered using a disposable syringe filter ("TOYO DISMIC-25CS Cellulose Acetate 0.45 µm HYDROPHILIC" made by ADVANTEC TOYO KAISHA, LTD.) The resulting filtrate was dispensed to a glass vial for chromatography.

<HPLC Analysis> Such prepared sample was analyzed by HPLC. The conditions for HPLC analysis were as follows.
Equipment: High Performance Liquid Chromatography with Ultraviolet Detector ("Chromaster" made by Hitachi Ltd.)
Column: Develosil RPAQUEOUS AR-5, 4.6 mm x 250 mm
Guard Column: RP-AR guard column (Nomura Kagaku)
Mobile Phase (Liquid A): 100 mM phosphate buffer (pH 2.5)
Mobile Phase (Liquid B): 90% acetonitrile
Flow Velocity: 1.0 ml/min
Detection Wavelength: 254 nm
Column Temperature: 40°C
Sample Injection Volume: 10 µl
Analysis time: 38 minutes/sample

The conditions for the gradient are shown in Table 1.

**[Table 1]**

| | Liquid A | Liquid B |
|---|---|---|
| 0 min | 100 | 0 |
| 5 min | 100 | 0 |
| 25 min | 92.5 | 7.5 |
| 25.1 min | 80 | 20 |
| 28 min | 80 | 20 |
| 28.1 min | 100 | 0 |
| 32 min | 100 | 0 |

### <Result>

Table 2 shows Brix, pH, and nucleic acid analysis (AMP and IMP) in tomato paste before being processed enzymatically and concentrated.

Table 3 shows Brix, pH, and nucleic acid analysis (AMP and IMP) in the concentrated tomato juice.

**[Table 2]**

| | |
|---|---|
| Adenylic acid (ppm) | 483 |
| Inosinic acid (ppm) | 0 |
| Brix | 29.5 |
| pH | 4.16 |

**[Table 3]**

| | | | | | | |
|---|---|---|---|---|---|---|
| Time after start of release from concentrator (min) | 0 | 30 | 60 | 90 | 120 | 150 |
| Adenylic acid (ppm) | 10 | 14 | 11 | 13 | 10 | 12 |
| Inosinic acid (ppm) | 394 | 398 | 394 | 406 | 405 | 404 |
| Brix | 24.57 | 24.20 | 24.52 | 24.26 | 24.43 | 24.38 |
| pH | 4.2 | 4.22 | 4.22 | 4.23 | 4.23 | N.D. |

<Consideration/Summary> The examples indicate that concentrating juice simultaneously with enzymatical processing makes the quality of concentrated juice (e.g., concentrated vegetable juice, concentrated fruit juice, etc.) stable and makes production efficient.

### INDUSTRIAL APPLICABILITY

The present invention will be useful in the field of production and sale of concentrated juice (concentrated vegetable juice, concentrated fruit juice, etc.).

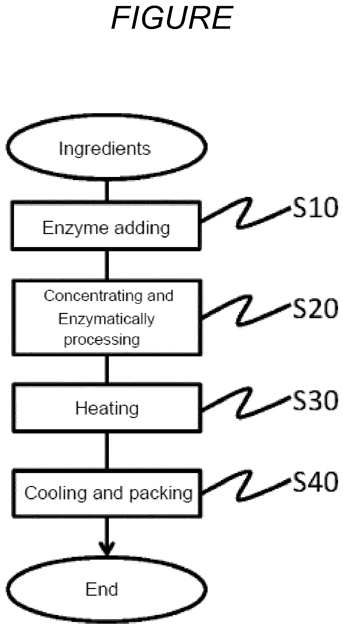

## Claims

1. A method for producing concentrated juice, comprising at least the steps of:
continuously concentrating vegetable juice or fruit juice; and
enzymatically processing the vegetable juice or the fruit juice simultaneously or parallelly with the concentrating step.

2. The method of claim 1 further comprising the step of:
continuously or intermittently adding an enzyme to the vegetable juice or the fruit juice during or before the concentrating step.

3. The method of claim 1 or 2, wherein the enzymatically processing step uses an enzyme which has an optimum temperature within a temperature range of the vegetable juice or the fruit juice during the concentrating step.

4. The method of claim 3, wherein the temperature of the vegetable juice or the fruit juice during the concentrating step is 50°C or higher and 75°C or lower.

5. The method of any one of claims 1 to 4, wherein the enzymatically processing step uses an enzyme which has an optimum pH within a pH range of the vegetable juice or the fruit juice during the concentrating step.

6. The method of claim 5, wherein the pH of the vegetable juice or the fruit juice during the concentrating step is 3.0 or more and 5.0 or less.

7. The method of any one of claims 1 to 6, wherein the concentrating step and the enzymatically processing step are carried out for 30 minutes or more and 3 hours or less.

8. The method of any one of claims 1 to 7, further comprising the step of:
preheating at least one of vegetables, fruits, the vegetable juice, and the fruit juice, before the enzymatically processing step.

9. The method of any one of claims 2 to 7, further comprising the step of:
preheating at least one of vegetables, fruits, the vegetable juice, and the fruit juice, before the adding step.

10. A method for producing concentrated juice, comprising at least the steps of:
continuously concentrating vegetable juice or fruit juice; and
continuously or intermittently adding an enzyme to the vegetable juice or the fruit juice during or before the concentrating step.

11. A method for modifying concentrated juice, comprising at least the steps of
continuously concentrating vegetable juice or fruit juice; and
enzymatically processing the vegetable juice or the fruit juice simultaneously or parallelly with the concentrating step.

12. The method of claim 11 further comprising the step of:
continuously or intermittently adding an enzyme to the vegetable juice or the fruit juice during or before the concentrating step.

13. A method for modifying concentrated juice, comprising at least the steps of
continuously concentrating vegetable juice fruit juice; and
continuously or intermittently adding an enzyme to the vegetable juice or the fruit juice during or before the concentrating step.
